# EUROPEAN PATENT SPECIFICATION

(11) **EP 1 989 154 B1**
(45) Date of publication and mention of the grant of the patent: **20.07.2011**
(21) Application number: 07752179.7
(22) Date of filing: 01.03.2007
(51) Int. Cl.: C09D 127/18, C03C 25/10

(54) **RAPID DRYING OF FLUOROPOLYMER DISPERSION COATING COMPOSITIONS**
SCHNELLE TROCKNUNG VON FLUORPOLYMERDISPERSONSBESCHICHTUNGSZUSAMMENSETZUNGEN
SECHAGE RAPIDE DE COMPOSITIONS DE REVETEMENT A BASE D'UNE DISPERSION DE FLUOROPOLYMERE

(30) Priority: 02.03.2006 US 778265 P
(43) Date of publication of application: 12.11.2008
(73) Proprietor: E.I. DU PONT DE NEMOURS AND COMPANY, Wilmington, DE 19898 (US)
(72) Inventor: ENGLISH, Jeffrey, Todd, Moss Bluff, Louisiana 70611 (US); FLOWERS, Devin, Kennett Square, Pennsylvania 19348 (US); HOECK, Richard, George, Hockessin, Delaware 19707 (US)
(74) Representative: Matthews, Derek Peter
(86) International application number: PCT/US2007/005462
(87) International publication number: WO 2007/103228

(56) References cited:
- EP-A- 1 614 731
- WO-A-2006/069101
- JP-A- 2002 080 547
- US-A- 3 752 783
- US-A- 4 521 596
- US-A1- 2004 214 944
- US-A1- 2005 084 742

## Description

### FIELD OF THE INVENTION

This invention relates to aqueous fluoropolymer dispersion coating compositions and processes for forming coatings from the dispersions.

### BACKGROUND OF THE INVENTION

Fluoropolymers are applied to a wide number of substrates in order to confer release, chemical and heat resistance, corrosion protection, cleanability, low flammability, and weatherability. Coatings of polytetrafluoroethylene (PTFE) homopolymers and modified PTFE provide the highest heat stability among the fluoropolymers, but unlike tetrafuoroethylene (TFE) copolymers, cannot be melt processed to form films and coatings. Therefore other processes have been developed for applying coatings of PTFE homopolymers and modified PTFE. One such process is dispersion coating which applies the fluoropolymer in dispersion form and, although primarily used to apply PTFE coatings, melt-processible TFE copolymer dispersion coatings are also applied in some applications. Dispersion coating processes typically employ such fluoropolymer dispersions in a more concentrated form than the as-polymerized dispersion. These concentrated dispersions contain a significant quantity of surfactant, e.g. 6-8 weight percent. Such dispersion coating processes include the steps of applying concentrated dispersion to a substrate by common techniques such as spraying, roller or curtain coating; drying the substrate to remove volatile components; and baking the substrate. When baking temperatures are high enough, the primary dispersion particles fuse and become a coherent mass. Baking at high temperatures to fuse the particles is often referred to as sintering.

In many applications such as glass cloth coating, the performance of a fluoropolymer coating is dependent on the thickness of the film applied and a thick coating is frequently desired. However, if fluoropolymer dispersions are applied too thickly in a single application, the coating will suffer crack formation and the quality of the coating will be diminished or rendered unacceptable for the desired use. Consequently, when thicker coatings are desired, a dispersion coating process essentially requires several passes to create a coating of the desired thickness. After each pass, it is necessary to submit the coated substrate to a drying step to insure that water is removed uniformly and no pockets of moisture remain. There is an economic penalty for additional passes and the drying step is especially sensitive and time consuming to achieve uniform moisture removal. If drying is conducted too rapidly, the dispersion coating will boil and blister the coating. If insufficient time is allowed for drying, wet pockets will remain within the dispersion coating and cause film disruption upon subsequent heating.

It is known to employ microwave drying in the manufacture of some fluoropolymer coated substrates. In the manufacture of fluoropolymer coated strands for use as packing and gaskets, aramid, glass, or natural fibers are braided and coated by dipping in PTFE dispersion. The braided structures are then dried but not sintered. Drying time is a significant part of the overall manufacturing time for such strands.

Fluorosurfactants are typically used in the dispersion polymerization of fluoropolymers, the fluorosurfactants functioning as a non-telogenic dispersing agent as described in U.S. Patent 2,559,752 to Berry. Unless removed, fluorosurfactant is present in fluoropolymer dispersions. Because of environmental concerns, processes have been developed to reduce the fluorosurfactant content in aqueous fluoropolymer dispersions to decrease emissions of fluorosurfactants and/or decrease or eliminate the need to capture fluorosurfactants during end use processing of fluoropolymer dispersions. US 6,833,403 to Bladel et al. discloses a process for reducing the fluorosurfactant content of aqueous fluoropolymer dispersions using an anion exchange process to treat stabilized dispersion.

However, when the fluorosurfactant content of dispersion is reduced using a process such as disclosed in US 6,833,403 to Bladel et al., a significant increase in the drying time is observed in microwave drying operations. In processes in which the drying is a rate limiting step, the overall productivity of the fluoropolymer coating process is adversely affected.

### BRIEF SUMMARY OF THE INVENTION

The invention provides a process for making a fluoropolymer coated substrate comprising:
applying an aqueous fluoropolymer dispersion coating composition comprising an aqueous medium and fluoropolymer particles with a fluorosurfactant content of less than about 300 ppm to a substrate to form a wet coating on the substrate, the aqueous fluoropolymer coating composition comprising added water soluble salt; and
drying the wet coating to form the fluoropolymer coated substrate by applying high frequency electromagnetic radiation to the wet coating, the added water soluble salt being effective to decrease the time required to dry the wet coating on the substrate by at least about 5% compared to an otherwise identical coating composition without the added water soluble salt.

### DETAILED DESCRIPTION

### Fluoropolymer Dispersions

The aqueous fluoropolymer dispersion used in producing coating compositions in accordance with the present invention is made by dispersion polymerization (also known as emulsion polymerization). Fluoropolymer dispersions are comprised of particles of polymers made from monomers wherein at least one of the monomers contains fluorine. The fluoropolymer of the particles of the aqueous dispersions used in this invention is independently selected from the group of polymers and copolymers of trifluoroethylene, hexafluoropropylene, monochlorotrifluoroethylene, dichlorodifluoroethylene, tetrafluoroethylene, perfluoroalkyl ethylene monomers, perfluoro(alkyl vinyl ether) monomers, vinylidene fluoride, and vinyl fluoride. Preferred polymers include polytetrafluoroethylene (PTFE), copolymers of tetrafluoroethylene (TFE) with perfluoro(alkyl vinyl ether) (referred to in the art as PFA), copolymers of TFE with hexafluoropropylene (referred to in the art as FEP), and compolymers of TFE with ethylene (referred to in the art as ETFE).

Particularly preferred fluoropolymer particles used in the dispersion employed in this invention are non-melt-processible particles of polytetrafluoroethylene including modified PTFE which is not melt-processible. Polytetrafluoroethylene refers to the polymerized tetrafluoroethylene by itself without any significant comonomer present. Modified PTFE refers to copolymers of TFE with such small concentrations of comonomer that the melting point of the resultant polymer is not substantially reduced below that of PTFE. The concentration of such comonomer is preferably less than 1 wt%, more preferably less than 0.5 wt%. The modified PTFE contains a small amount of comonomer modifier which improves film forming capability during baking (fusing), such as perfluoroolefin, notably hexafluoropropylene (HFP) or perfluoro(alkyl vinyl) ether (PAVE), where the alkyl group contains 1 to 5 carbon atoms, with perfluoro(ethyl vinyl) ether (PEVE) and perfluoro(propyl vinyl) ether (PPVE) being preferred. Chlorotrifluoroethylene (CTFE), perfluorobutyl ethylene (PFBE), or other monomer that introduces bulky side groups into the molecule are also included. The PTFE typically has a melt creep viscosity of at least 1 x 109 Pa●s. The resins in the dispersion used in this invention when isolated and dried are non-melt-processible.

By non-melt-processible, it is meant that no melt flow is detected when tested by the standard melt viscosity determining procedure for melt-processible polymers. This test is according to ASTM D-1238-00 modified as follows: The cylinder, orifice and piston tip are made of corrosion resistant alloy, Haynes Stellite 19, made by Haynes Stellite Co. The 5.0 g sample is charged to the 9.53 mm (0.375 inch) inside diameter cylinder which is maintained at 372°C. Five minutes after the sample is charged to the cylinder, it is extruded through a 2.10 mm (0.0825 inch diameter), 8.00 mm (0.315 inch) long square-edge orifice under a load (piston plus weight) of 5000 grams. This corresponds to a shear stress of 44.8 KPa (6.5 pounds per square inch). No melt extrudate is observed.

In one preferred embodiment, the fluoropolymer particles in the dispersion used in this invention comprise a core of high molecular weight polytetrafluoroethylene (PTFE) and a shell of lower molecular weight polytetrafluoroethylene or modified polytetrafluoroethylene.

The preferred non-melt-processible PTFE or modified fPTFE have a standard specific gravity (SSG) of about 2.14 to about 2.50. Preferably, the SSG is less than about 2.40, more preferably less than about 2.30, and most preferably less than about 2.25. The SSG is generally inversely proportional to the molecular weight of PTFE or modified PTFE.

The fluoropolymer particles in the dispersion used in this invention preferably have a number average particle size of about 10 nm to about 400 nm, most preferably, about 100 nm to about 400 nm.

A typical process for the aqueous dispersion polymerization of preferred PTFE polymer is a process wherein TFE vapor is fed to a heated reactor containing fluorosurfactants, paraffin wax and deionized water. A chain transfer agent may also be added if it is desired to reduce the molecular weight of the PTFE. A free-radical initiator solution is added and, as the polymerization proceeds, additional TFE is added to maintain the pressure. The exothermic heat of reaction is removed by circulating cooling water through the reactor jacket. After several hours, the feeds are stopped, the reactor is vented and purged with nitrogen, and the raw dispersion in the vessel is transferred to a cooling vessel. Paraffin wax is removed and the dispersion is isolated and stabilized with nonionic surfactant.

The dispersing agent used in this process is preferably a fluorinated surfactant. The fluorosurfactant in the dispersion is a non-telogenic, anionic dispersing agent, soluble in water and comprising an anionic hydrophilic group and a hydrophobic portion. Preferably, the hydrophobic portion is an aliphatic fluoroalkyl group containing at least four carbon atoms and bearing fluorine atoms and having no more than two carbon atoms not bearing fluorine atoms adjacent to the hydrophilic group. These fluorosurfactants are used as a polymerization aid for dispersing and, because they do not chain transfer, they do not cause formation of polymer with undesirable short chain length. An extensive fist of suitable fluorosurfactants is disclosed in Patent 2,559,752 to Berry. Preferably, the fluorosurfactant is a perfluorinated carboxylic or sulfonic acid having 6-10 carbon atoms and is typically used in salt form. Suitable fluorosurfactants are ammonium perfluorocarboxylates, e.g., ammonium perfluorocaprylate or ammonium perfluorooctanoate (APFO). The fluorosurfactants are usually present in the amount of 0.02 to 1 wt % with respect to the amount of polymer formed. The fluorinated surfactant is used to aid the polymerization process but the amount remaining in the concentrated dispersion composition is significantly reduced as will be explained below.

The initiators preferably used to make dispersion for use in the process of this invention are free radical initiators. They may be those having a relatively long half-life, preferably persulfates, e.g., ammonium persulfate or potassium persulfate. To shorten the half-life of persulfate initiators, reducing agents such as ammonium bisulfite or sodium metabisulfite, with or without metal catalysis salts such as Fe (III), can be used. Alternatively, short half-life initiators such as potassium permanganate/oxalic acid can be used.

In addition to the long half-life persulfate initiators, small amounts of short chain dicarboxylic acids such as succinic acid or initiators that produce succinic acid such as disuccinic acid peroxide (DSP) may be also be added in order to reduce coagulum

To produce dispersion with low fluorosurfactant content as described below, sufficient nonionic surfactant as is described in more detail hereinafter is added to prevent coagulation of the dispersion when the fluorosurfactant content is reduced. The aqueous dispersion can range in fluoropolymer solids content from about 10 to about 70 wt%. Typically, nonionic surfactant is added for stabilization prior to fluorosurfactant reduction and then as desired, concentration of the dispersion is conducted. For concentrating, the polymer is held at a temperature above the cloud point of the nonionic surfactant. Once concentrated to about 30 to about 70 weight % fluoropolymer, and preferably about 45 to about 65 weight % fluoropolymer, the upper clear supernate is removed. Further adjustment of the final solids concentration and surfactant are made as needed. One patent illustrative of a process for concentrating is U.S. Patent 3,037,953 to Marks and Whipple.

### Substrates

The substrate used in this invention can be any of a variety of structures including a sheet, film, cloth, container, fabricated part, fiber or fibrous article. As will be described in more detail below, the substrate used in a preferred embodiment of this invention is preferably substantially transparent to microwave radiation. Preferred substrates of this type include polymer, glass, ceramic and composites thereof. In one preferred embodiment the substrate is glass cloth. In another preferred embodiment the substrate is aramid fiber, glass fiber, or natural fiber , preferably in the form of braids of such fiber. Braided fibers with fluoropolymer coatings are useful for making gaskets. Typically, the fluoropolymer in such gasket materials are unsintered. In another embodiment, the substrate is bakeware.

### Nonionic Surfactants

Any of a wide variety of nonionic surfactants can be used in the aqueous fluoropolymer dispersion coating compositions employed in accordance with the invention. Such nonionic surfactants include alkyl phenol ethyoxylates and aliphatic alcohol ethoxylates. Preferably, the nonionic surfactants used are aliphatic alcohol ethoxylates. The nonionic surfactants are preferably present in the dispersion in amounts of about 2 to about 11 weight %, most preferably about 3 to about 11 weight %, based on the weight of the fluoropolymer. Suitable nonionic surfactants include any of a variety of nonionic surfactants or mixtures thereof which preferably provide a desired cloud point during concentration.

The dispersions used in this invention are preferably essentially free of surfactants containing aromatic groups that can thermally decompose and be converted to harmful organic aromatic compounds that may adversely affect air and water quality during dispersion coating processes. In addition, these materials are prone to producing tar-like buildup on processing equipment, producing smoke and causing foaming in wash water. Essentially free of essentially free of surfactants containing aromatic groups preferably means that the dispersions employed contain less than about 0.5 weight % of such surfactants. The surfactants used in this invention burn off cleanly without thermally decomposing on a substrate leaving lower residuals than alkyl phenol ethoxylates.

Especially preferred aliphatic alcohol ethoxylates are a compound or mixture of compounds of the formula:

R(OCH₂CH₂)ₙOH

wherein R is a branched alkyl, branched alkenyl, cycloalkyl, or cycloalkenyl hydrocarbon group having 8-18 carbon atoms and n is an average value of 5 to 18. For example, a preferred ethoxylate used in this invention can be considered to be prepared from (1) a primary alcohol that is comprised of a hydrocarbon group selected from branched alkyl, branched alkenyl, cycloalkyl or cycloalkenyl or (2) a secondary or tertiary alcohol. In any event, the ethoxylate used in accordance with this invention does not contain an aromatic group. The number of ethylene oxide units in the hydrophilic portion of the molecule may comprise either a broad or narrow monomodal distribution as typically supplied or a broader or bimodal distribution which may be obtained by blending.

Nonionic surfactants employed in dispersions employed in accordance with the invention are preferably ethoxylates of saturated or unsaturated secondary alcohols having 8-18 carbon atoms. Secondary alcohol ethoxylates possess advantages over both primary alcohol ethoxylates and phenol ethoxylates including lower aqueous viscosities, more narrow gel ranges, and less foaming. Moreover, ethoxylates of secondary alcohols provide improved surface tension lowering and thus excellent wetting in end use applications such as coating operations.

The cloud point of a surfactant is a measure of the solubility of the surfactant in water. The surfactants in the aqueous dispersion employed in accordance with the invention preferably have a cloud point of about 30°C to about 90°C, preferably about 35°C to about 85°C.

The aliphatic alcohol ethoxylates employed in carrying out the present invention also have a 20% residuals temperature determined by TGA of less than about 290°C, preferably less than 285°C more preferably less than 280°C and typically fall within the preferred range of 250°C to 290°C. In addition or in the alternative, it is preferred that the aliphatic alcohol ethoxylate nonionic surfactant has a thermal decomposition temperature determined by thermogravimetric analysis (TGA) of less than about 250°C, more preferably less than about 240°C, most preferably less than about 230°C.

Nonionic surfactants of the type generally used to stabilize fluoropolymer dispersions can be either liquids or solids at room temperature. If solid, the surfactant tends to be pasty and difficult to handle. They can be handled but often require heated tanks and transfer lines to keep them as a liquid. In addition to the capital cost of the heated equipment, there are operational restrictions placed on the system. If the temperature is maintained too low, tanks and transfer lines can become plugged with solid material. If the temperature is too high, degradation of the surfactant can occur.

Generally low viscosity liquids are preferred from a handling point of view. High viscosity liquids are more difficult to handle and often require heated tanks and lines to keep the viscosity low enough for ease in handling. Some of the apparent liquid surfactants are physically metastable in that they may exist as liquids for several days and then turn into pasty solids. Sometimes water is added to the surfactant to lower its viscosity and making it easier to handle. However, too much water detracts from the desire to produce more concentrated dispersions.

The aqueous dispersion of non-melt-processible fluoropolymer particles and nonionic surfactant preferably used in this invention preferably contains a nonionic surfactant containing 0-20 weight % water, preferably 0 -15 weight % water and is a stable liquid at room temperature. A surfactant is considered to be a stable liquid if it remains liquid for 3 days at room temperature after being chilled to 5°C and then warmed to room temperature (about 23 ± 3°C).

In a more preferred form of the dispersion employed in accordance with the invention, the aliphatic alcohol ethoxylate nonionic surfactant comprises ethoxylates of 2,6,8-trimethyl-4-nananol having an average of about 4 to about 12 ethylene oxide (EO) units, most preferably, ethoxylates of 2,6,8-trimethyl-4-nananol having an average about 9 to about 11 ethylene oxide units. Examples of preferred surfactants of this type are those sold under the trademark Tergitol® TMN-6 (nominally 6 EO units) and Tergitol® TMN-10 (nominally 10 EO units) which are available from Dow Chemical Corporation. A blend of 30% Tergitol® TMN-6 and 70% Tergitol® is also available from Dow Chemical Corporation as Tergitol® TMN-100X.

Dispersions containing nonionic surfactant made as described herein thus are stabilized fluorosurfactant-containing dispersions suitable for use in the reduction of the fluorosurfactant content as will be described below.

### Fluorosurfactant Reduction

The aqueous dispersion employed in accordance with the invention has reduced fluorosurfactant content, i.e., less than about 300 ppm based on the total dispersion weight. Preferably, the fluorosurfactant content is less than about 100 ppm, more preferably less than about 50 ppm.

While any suitable method can be used to reduce fluorosurfactant content, contacting the aqueous dispersion with an anion exchange resin is advantageously used for this purpose. Contacting of the dispersion with anion exchange resin can occur before or after concentration but typically the lower solids material before concentration is easier to process, especially when a fixed bed is employed for carrying out the contacting step. If the process is carried out prior to concentration, nonionic surfactants are added prior to contact with the anion exchange resin as discussed above. Further, it is common to add a nonfluorinated anionic surfactant such as sodium lauryl sulfate to the dispersion prior to concentration to prevent a viscosity increase which can occur upon concentration. A nonfluorinated cationic surfactant can also be used as described in US Application No. 60/638,310, filed December 22, 2004.

Any of a variety of techniques which bring the dispersion in contact with the anion exchange resin can be used to carry out ion exchange of the process. For example, the process can be carried out by addition of ion exchange resin bead to the dispersion in a stirred tank, in which a slurry of the dispersion and resin is formed, followed by separation of dispersion from the anion exchange resin beads by filtration. Another suitable method is to pass the dispersion through a fixed bed of anion exchange resin instead of using a stirred tank. Flow can be upward or downward through the bed and no separate separation step is needed since the resin remains in the fixed bed.

The contacting of the dispersion is performed at a temperature which is sufficiently high to facilitate the rate of ion exchange and to reduce the viscosity of the dispersion but being below a temperature at which the resin degrades at a detrimentally high rate or a viscosity increase in observed. Upper treatment temperature will vary with the type of polymer and nonionic surfactant employed. Typically, temperatures will be between 20°C and 80°C.

The fluorosurfactant can be recovered from the anion exchange resin if desired or the resin with the fluorosurfactant can be disposed of in an environmentally acceptable method, e:g., by incineration. If it is desired to recover the fluorosurfactant, the fluorosurfactant may be removed from resin by elution. Elution of fluorosurfactant adsorbed on the anion exchange resin is readily achieved by use of ammonia solution as demonstrated by Seki in U.S. Patent 3,882,153, by a mixture of dilute mineral acid with organic solvent (e.g., HCl/ethanol) as demonstrated by Kuhls in U.S. Patent 4,282,162, or by strong mineral acids such as sulfuric acid and nitric, transferring the adsorbed fluorinated carboxylic acid to the eluent. The fluorosurfactant in the eluent in high concentration can easily be recovered in the form of a pure acid or in the form of salts by common methods such as acid-deposition, salting out, and other methods of concentration, etc.

### Ion Exchange Resins

The ion exchange resins for use in accordance with reducing the fluorosurfactant content of the aqueous dispersion used in the present invention include anionic resins but can also include other resin types such as cationic resins, e.g., in a mixed bed. The anionic resins employed can be either strongly basic or weakly basic. Suitable weakly basic anion exchange resins contain primary, secondary amine, or tertiary amine groups. Suitable strongly basic anion exchange resin contain quaternary ammonium groups. Although weakly basic resins are useful because they can be regenerated more easily, strongly basis resins are preferred when it is desired to reduce fluorosurfactant to very low levels and for high utilization of the resin. Strongly basic ion exchange resins also have the advantage of less sensitivity to the pH of the media. Strong base anion exchange resins have an associated counter ion and are typically available in chloride or hydroxide form but are readily converted to other forms if desired. Anion exchange resins with hydroxide, chloride, sulfate, and nitrate can be used for the removal of the fluorosurfactant but anion exchange resins in the form of hydroxide are preferred to prevent the introduction of additional anions and to increase pH during anion exchange because a high pH, i.e., greater than 9, is desirable in the product prior to shipping to inhibit bacterial growth. Examples of suitable commercially-available strong base anion exchange resins with quaternary ammonium groups with a trimethylamine moiety include DOWEX® 550A, US Filter A464-OH, SYBRON M-500-OH, SYBRON ASB1-OH, PUROLITE A-500-OH, Itochu TSA 1200, AMBERLITE® IR 402. Examples of suitable commercially-available strong base anion exchange resins with quaternary ammonium groups with a dimethyl ethanol amine moiety include US Filter A244-OH, AMBERLITE® 410, DOWEX® MARATHON A2, and DOWEX® UPCORE Mono A2.

Ion exchange resin used to reduce fluorosurfactant for use in the process of the present invention is preferably monodisperse. Preferably, the ion exchange resin beads have a number average size distribution in which 95% of the beads have a diameter within plus or minus 100 µm of the number average bead diameter.

The monodisperse ion exchange resin has a particle size which provides a suitable pressure drop through the bed. As discussed previously, very large beads are fragile and prone to breakage. Very small ion exchange beads are susceptible to tight particle packing resulting in tortuous channels in the bed. This can result in high shear conditions in the bed. Preferred ion exchange resin has a number average bead size about 450 to about 800 µm, more preferably, the ion exchange resin beads have a number average bead diameter of about 550 to about 700 µm.

### Water Soluble Salts

By "added water soluble salt" is meant salts or mixtures thereof, or materials which form salts, which are added at any time during manufacture or processing prior to drying in addition to salts normally used or formed during polymerization, fluorosurfactant reduction and/or concentration of the dispersion. The salts according to the present invention are inorganic water soluble salts.

For the practice of the invention the inorganic water soluble salt is selected from the group consisting of alkali metal and ammonium salts of fluoride, bromide, chloride, nitrate and sulfate. It is preferable for the added water soluble salt to be selected so as to not introduce extraneous ions into the coating composition. "Extraneous ions" are defined to be types of ions which are not already present in the dispersion composition due its polymerization, fluorosurfactant reduction and/or concentration of the dispersion. For example, ammonium ions are present due to the ammonium persulfate initiator used and because of ammonia addition for pH control. Sulfate ions are present when persulfate initiator is used due to the reduction of persulfate to sulfate. Fluoride ion is typically formed during the polymerization of most fluoromonomers. Examples of particularly effective salts include sulfate and fluoride salts, most preferably ammonium sulfate and ammonium fluoride.

As explained in more detail below, by adding an effective amount of water soluble salts in an aqueous fluoropolymer dispersion coating composition, the ionic conductivity of the coating composition is increased causing more rapid drying of a coated substrate when electromagnetic energy such as microwave radiation is applied and the drying time is reduced by at least about 5%.

### Fillers, Pigments and Additives

The fluoropolymer dispersion coating composition employed in accordance with the invention optionally contains fillers, pigments and other additives known for use in dispersion coating compositions provided that such materials are non-coupling with the high frequency electromagnetic radiation applied or are employed in sufficiently small quantities. For example, mineral fillers such as talc and clays are generally neutral in microwave radiation. Similarly, non-coupling pigments like titanium dioxide can also be used.

### Process

In the process of the invention, a fluoropolymer coated substrate is made by applying the aqueous fluoropolymer dispersion coating composition with reduced fluorosurfactant content as discussed above to a substrate to form a wet coating on the substrate. The aqueous fluoropolymer dispersion coating composition can be applied to a substrate by conventional means. Both single and multiple layer coating applications can be used. In multiple layer processes, the various layers can be the same or different. The application method used is dependent upon the type of fluoropolymer coating composition as well as the substrate to be coated. Spray and roller applications forming each layer are convenient application methods. Other well-known coating methods including dipping, curtain coating and coil coating are suitable.

The wet coating is dried to form the fluoropolymer coated substrate by applying high frequency electromagnetic radiation to the wet coating. According to the present invention, the high frequency electromagnetic radiation used for drying is microwave radiation. The microwave portion of the electromagnetic spectrum is characterized by wavelengths between 1 mm and 1 m, and corresponds to frequencies between 100 and 5,000 MHz. The most commonly used microwave radiation has a frequency of roughly 2,500 megahertz (2.5 gigahertz) because of the ability of this frequency to be effectively absorbed by water to cause heat generation.
In this way, water can be effectively removed by evaporation and the aqueous fluoropolymer dispersion coating composition on the substrate is dried. In addition, most polymers, glass, or ceramics and composites thereof are substantially transparent to microwaves in this frequency range. Thus, preferred embodiments of the invention employ substrates comprising polymer, glass, ceramic or composites thereof. Microwave radiation is effectively used in these embodiments of the invention because it is not blocked by the substrate.

In accordance with the invention, the added water soluble salt is present in the low fluorosurfactant dispersion coating composition in an amount effective to decrease the time required to dry the wet coating on the substrate. Microwaves are known to interact with ions in aqueous solution by a mechanism referred to as ionic conduction. Ions in an aqueous solution are charged species that can couple with the oscillating electrical field of the microwaves and increase the heating of the water present. It is believed that microwaves interact by the same mechanism with the added water soluble salt in the composition of the invention. By including an effective amount of water soluble salt in the aqueous fluoropolymer dispersion coating composition, more rapid drying of a coated substrate occurs when electromagnetic radiation is applied. In a preferred form of the invention, the added water soluble salt provides a conductivity of the aqueous fluoropolymer dispersion composition is at least about 600µS/cm. Surprisingly, it has been discovered that preferred embodiments of this invention provide an optimum conductivity for drying aqueous fluoropolymer dispersion composition. More preferably, the conductivity of the aqueous fluoropolymer dispersion composition is about 600 to about 2000µS/cm, even more preferably in the range from about 700 to about 1500µS/cm, most preferably about 800 to about 1200 µS/cm.

The time range required for drying in microwave drying processes is highly variable depending on the properties of the substrate, e.g., composition, shape, porosity, and thickness, the properties of the dispersion coating composition, e.g., water and nonionic surfactant content, and other process conditions, e.g., ambient air temperature and humidity, and air flow. Drying times can vary from a few seconds to tens of minutes depending on the process. In a process in accordance with the invention, the added water soluble salt is effective in a substrate coating process to decrease the drying time by at least about 5% compared to an otherwise identical coating composition without the added water soluble salt. In preferred forms of the invention, added water soluble salt is effective to decrease in a substrate coating process the time required to dry a wet coating of the dispersion composition applied on a substrate by at least about 10%, more preferably 15%, compared to otherwise identical coating composition without the added water soluble salt. In some processes in accordance with the invention, the time decrease be even greater, exceeding 50% or more.

### Aqueous Fluoropolymer Dispersion Coating Compositions

The invention also provides an aqueous fluoropolymer dispersion coating composition comprising an aqueous liquid medium and dispersed fluoropolymer particles with a fluorosurfactant content of less than about 300 ppm, the composition comprising added water soluble salt effective to decrease in a substrate coating process the time required to dry using high frequency electromagnetic radiation a wet coating of the dispersion composition applied on a substrate by at least about 5% compared to otherwise identical coating composition without the added water soluble salt.

In preferred forms of the invention, added water soluble salt is effective to decrease in a substrate coating process the time required to dry using high frequency electromagnetic radiation a wet coating of the dispersion composition applied on a substrate by at least about 10%, more preferably 15%, compared to otherwise identical coating composition without the added water soluble salt.

In preferred forms of the invention, the conductivity of the aqueous fluoropolymer dispersion coating composition is at least about 600 µS/cm. Preferably, the conductivity is about 600 to about 2000 µS/cm, more preferably, about 700 to about 1500 µS/cm, and most preferably, about 800 to about 1200 µS/cm.

### Fluoropolymer Coated Strands for Gaskets and Packing

Fluoropolymer gasket and packing materials can be made in accordance with the invention by submerging a fibrous substrate, preferably braided and up to 4 inches in diameter, into fluoropolymer dispersion. Preferred fibrous substrates include those containing glass fiber, aramid fiber such as that sold under the trademark Kevlar® by the DuPont Company, natural fibers such as cotton, and mixtures of such fibers. The fluoropolymer dispersion preferably contains about 30 to about 65 wt% solids depending on the desired coating thickness and degree of impregnation with the fluoropolymer. PTFE is the preferred fluoropolymer for this application.

In performing the process, the fibrous substrate may be submerged as a complete roll for about 1 to about 24 hours or passed as a single strand through a PTFE dispersion bath. Following the coating step, the PTFE coated substrate is placed in or passes through a microwave oven to remove the water and surfactant. Adding water soluble salts to the dispersion with low fluorosurfactant content reduces the time needed for microwave drying of the coated substrate.

The fluoropolymer coated fibrous substrates are useful in many applications including gaskets and is especially useful packing to extend the life of various pumps, valves, and agitators compared to packing which does not contain fluoropolymer. The fluoropolymer, especially a TFE coated surface, provides a low coefficient of friction to reduce wear and heat generated from repeated rubbing under high-pressure loads. In addition, the PTFE impregnated substrate has excellent thermal resistance (-100°C - 260°C), chemical inertness, and acid-base resistance (pH 0 - 14).

### Glass Cloth Coating

Fluoropolymer coated glass cloth can be made in accordance with the invention by coating the glass cloth substrate with fluoropolymer dispersion, typically PTFE dispersion, which is dried, baked and sintered in an oven. Usually, a multiple pass process is used to provide the desired coating thickness although sintering may be omitted in the early passes.

The coating is typically performed using dip-tank with the dispersion concentration being about 30 to about 65% solids. In a typical coating process, the glass cloth with wet coating then enters an oven in which water is removed in a drying zone, surfactant is removed in a baking zone, and then sintering is performed in a sintering zone to fuse the fluoropolymer particles. In a process of the invention used for glass cloth coating, high frequency electromagnetic radiation is preferably applied to a wet coating in the drying zone, either as an alternative or a supplement to conventional oven drying. Heating the water in the wet coating with high frequency electromagnetic radiation such as microwaves provides more uniform, more controlled, and faster drying than can be performed with a conventional oven. If oven temperatures and/or residence times in a conventional over are increased to promote more rapid drying, overheating of the wet coating surface can occur. Surface overheating can cause skinning of the wet coating, resulting in blistering and other coating defects. Thus, microwave drying is especially useful for thick fabrics where long drying times would otherwise be required. The process of the invention employing added water salts provides decreased drying times in dispersions with low fluorosurfactant content.

Fluoropolymer coated glass cloth has excellent nonstick, weather resistance, chemical resistance and wide temperature application range and thus has a wide variety of industrial uses. Principal uses include architecture, e.g., tent-like roof structures, and manufacturing process equipment, e.g., conveyor belts for food processing.

### TEST METHODS

**Solids content** of raw (as polymerized) fluoropolymer dispersion are determined gravimetrically by evaporating a weighed aliquot of dispersion to dryness, and weighing the dried solids. Solids content is stated in weight % based on combined weights of PTFE and water. Alternately solids content can be determined by using a hydrometer to determine the specific gravity of the dispersion and then by reference to a table relating specific gravity to solids content. (The table is constructed from an algebraic expression derived from the density of water and density of as polymerized PTFE.)
**Number average dispersion particle size** on raw dispersion is measured by photon correlation spectroscopy.
**Standard specific gravity (SSG)** of PTFE resin is measured by the method of ASTM D-4895. If a surfactant is present, it can be removed by the extraction procedure in ASTM-D-4441 prior to determining SSG by ASTM D-4895.
**Surfactant and solids content** of stabilized dispersion are determined gravimetrically by evaporating a small weighed aliquot of dispersion to dryness following in general ASTM D-4441 but using a time and temperature such that water but not the surfactant is evaporated. This sample is then heated at 380°C to remove the surfactant and reweighed. Surfactant content is stated in wt% based on fluoropolymer solids.
**20% Residuals Temperature and Thermal Decomposition Temperature:**
   The 20% residuals temperatures and thermal decomposition temperatures of surfactants are determined by thermogravimetric analysis (TGA) using a modified version of ASTM method E-1131 in air. For 20% residuals temperatures, samples to be tested have at least 90% by weight surfactant content. If the surfactant to be tested contains more than 10% by weight water or other volatile solvents, such solvents should be removed to no more than 10%. Alternatively, to adjust for greater than 10% solvent, the residuals weight is recalculated based on the weight fraction of surfactant content in the sample. The samples are heated at 10°C/min from room temperature to 204°C. Upon reaching 204°C, the heating rate is reduced to 2°C /min until the samples reach 482°C. At 482°C, the sample returns to being heated at 10°C /min until it reaches 600°C. The temperature at which weight loss to a 20% residuals of the original sample is reached is the 20% residuals temperature.
**Conductivity** is measured using an Orion Model 128 conductivity meter at 24°C.
**Fluorosurfactant Content** (APFO) is measured using a Hewlett Packard 5890 gas chromatograph. The fluorosurfactant is esterified using a straight chain alcohol of no greater than 3 carbons and introduced into the GC. Fluorosurfactant content is reported based on total weight percent of fluorosurfactant in the dispersion.

### EXAMPLES

TFE is polymerized using ammonium persulfate as the initiator to produce a raw PTFE homopolymer dispersion containing PTFE particles having an SSG of a about 2.20 and a number average particle size of approximately of 215 nm to 245 nm. The raw dispersion contains approximately 45% fluoropolymer solids and has an APFO content of about 1800 ppm.

Fluorosurfactant reduction is performed using a 14 inch (36 cm) diameter column approximately 8 feet (2.5 meters) long containing a fixed bed column of commercially-available strong base anion exchange resin with quaternary ammonium groups with a dimethyl ethanol amine moiety in hydroxide form (A244-OH by US Filter). Approximately 240 gallon quantities of raw dispersions are stabilized by adding nonionic surfactant Tergitol® TMN-1 0 to provide approximately 4 wt% nonionic surfactant based on the weight of the dispersion. The PTFE dispersion is pumped through the column. The APFO level of dispersion is reduced to less than 20 ppm. Ammonium hydroxide is added adjust the pH to between about 9.5 and about 10.5. The dispersion is then thermally concentrated using Tergitol® TMN-10 obtaining a solids content of between 59 and 61% by weight. Further addition of Tergitol® TMN-10 is made to bring the Tergitol® TMN-10 concentration to 6 weight %. In the Examples which follow, water soluble salts are added to the dispersion as described below and wet coatings formed from the dispersion are subjected to microwave drying. Prior to water soluble salt addition, the dispersion contains fluoride, sulfate, and ammonium ions which are present due to conditions and materials employed for polymerization, fluorosurfactant reduction and concentration of the dispersion.

### Example 1

Stock solutions of 1% by weight ammonium sulfate and ammonium fluoride are prepared by dissolving 1 gram of the aforementioned salt into 99 grams of de-ionized water. Aliquots of the stock salt solutions are added to 100 gram samples of a PTFE dispersion as prepared above. The aliquots are added to the PTFE dispersion samples in a manner such that the conductivity of the PTFE dispersion samples are increased to a target level. The results are as follows

**Table 1**

| **Reference and Ammonium Sulfate Containing PTFE Dispersion Conductivities** | | |
|---|---|---|
| **Disp Solution** | **Mass of 1% Ammonium Sulfate Solution added** | **Conductivity** |
| S200* | 0.0 grams | 196 µS |
| S250 | 0.5 grams | 268 µS |
| S500 | 2.0 grams | 494 µS |
| S750 | 4.0 grams | 757 µS |
| S1000 | 6.0 grams | 1029 µS |
| S1250 | 7.0 grams | 1250 µS |

| | | |
|---|---|---|
| * Reference sample - no salts added | | |

**Table 2**

| **Ammonium Fluoride Containing PTFE Dispersion Conductivities** | | |
|---|---|---|
| **Disp Solution** | **Mass of 1% Ammonium Sulfate Solution added** | **Conductivity** |
| F200* | 0.0 grams | 196 µS |
| F250 | 0.23 grams | 245 µS |
| F500 | 1.40 grams | 507 µS |
| F750 | 2.40 grams | 701 µS |
| F1000 | 4.00 grams | 1021 µS |
| F1250 | 5.00 grams | 1298 µS |

| | | |
|---|---|---|
| * Reference sample - no salts added | | |

Five (2.5 gram) aliquots of each dispersion solution described in Tables 1 and 2 are placed on a plastic weighing boat and dried in a microwave oven and the drying time is recorded. The microwave oven used is a commercial oven delivering 300 watts of microwave energy at a frequency of approximately the 2.5 gigahertz. The microwave drying chamber is equipped with an electronic balance that can measure up to 4 grams of sample with a sensitivity of +/- 0.1 mg. Drying time is defined as the time at which mass loss is less than 0.2 mg in 10 seconds. The results are given below in Table 3.

**Table 3**

| **Drying times of reference and salt containing PTFE dispersions** | | |
|---|---|---|
| **Disp Solution** | **Conductivity** | **Drying Time (5 sample average)** |
| S200 | 196 µS | 2.75 min |
| S250 | 268 µS | 2.62 min |
| S500 | 494 µS | 2.62 min |
| S750 | 757 µS | 2.62 min |
| S1000 | 1029 µS | 2.43 min |
| S1250 | 1250 µS | 2.25 min |
| F250 | 245 µS | 2.77 min |
| F500 | 507 µS | 2.60 min |
| F750 | 701 µS | 2.42 min |
| F1000 | 1021 µS | 2.40 min |
| F1250 | 1298 µS | 2.40 min |

The results above show a significant decrease in drying time with each added salt (18% for sulfate and 13% for fluoride) and the effect the begins to level out around 1000 µS.

### Example 2

PTFE coated pump packing material is made by taking a ~1/2 inch (1 cm) diameter braided strand made from Kevlar® aramid fiber. The fiber substrate is passed as a single braided strand through a bath of reduced APFO PTFE dispersion made as described above (~60 wt% solids, 6 wt% Tergitol® TMN-10 nonionic surfactant, APFO level of to less than 20 ppm.) Ammonium sulfate is added to the dispersion in the bath in sufficient quantity to increase the conductivity to ~1080µS.

Following the coating step, a strand of the substrate with the wet coating of the dispersion containing added ammonium sulfate is passed through a microwave oven to remove water and surfactant. In addition, the PTFE dispersion with no added water soluble salts (conductivity of <250µS) is used to provide a wet coating on the same strand to provide a microwave drying comparative. Compared to the PTFE dispersion with no added water soluble salts, the higher conductivity PTFE dispersion (~1080µS) dramatically reduces the time needed for microwave drying which leads to a 100% increase in the line speed over the lower conductivity dispersion with no added water soluble salts.

## Claims

1. A process for making a fluoropolymer coated substrate comprising:
reducing the fluorosurfactant content of an aqueous fluoropolymer dispersion coating composition, comprising an aqueous medium and fluoropolymer particles, to less than 300 ppm,
applying said aqueous fluoropolymer dispersion coating composition to a substrate to form a wet coating on said substrate,; and
drying said wet coating to form said fluoropolymer coated substrate by applying microwave radiation to said wet coating,
wherein said aqueous fluoropolymer dispersion coating composition contains added inorganic water soluble salt in an amount that decreases the time required to dry said wet coating on said substrate by at least 5% compared to an otherwise identical coating composition without said added inorganic water soluble salt, wherein said inorganic water soluble salt is selected from the group consisting of alkali metal and ammonium salts of fluoride, bromide, chloride, nitrate and sulfate.

2. The process of claim 1 wherein said added inorganic water soluble salt is present in an amount that decreases the time required to dry said wet coating on said substrate by at least 10% compared to the coating composition without said added inorganic water soluble salt.

3. The process of claim 1 wherein said added inorganic water soluble salt is present in an amount that decreases the time required to dry said wet coating on said substrate by at least 15% compared to the coating composition without said added inorganic water soluble salt.

4. The process of claim 1 wherein said added inorganic water soluble salt comprises sulfate or fluoride salts.

5. The process of claim 1 wherein said added inorganic water soluble salt increases the conductivity of said aqueous fluoropolymer dispersion coating composition to at least 600 µS/cm.

6. The process of claim 1 wherein said added inorganic water soluble salt increases the conductivity of said aqueous fluoropolymer dispersion coating composition in the range from 600 to 2000 µS/cm.

7. The process of claim 1 wherein said added inorganic water soluble salt increases the conductivity of said aqueous fluoropolymer dispersion coating composition to the range from 700 to 1500 µS/cm.

8. The process of claim 1 wherein said added inorganic water soluble salt increases the conductivity of said aqueous fluoropolymer dispersion coating composition in the range from 800 to 1200 µS/cm.

9. The process of claim 1 wherein said aqueous fluoropolymer coating composition contains 10 to 70 weight % fluoropolymer.

10. The process of claim 1 wherein said substrate is substantially transparent to microwave radiation.

11. The process of claim 1 wherein said substrate comprises polymer, glass, ceramic and composites thereof.

12. The process of claim 11 wherein said substrate is in the form of bakeware.

13. The process of claim 1 wherein said substrate comprises aramid fiber, glass fiber, natural fiber or mixtures thereof.

14. The process of claim 1 wherein said substrate comprises braided strands of aramid fiber, glass fiber, natural fiber or mixtures thereof.

15. The process of claim 1 wherein said substrate comprises glass cloth.

16. The process of claim 1 wherein said aqueous fluoropolymer coating composition has a fluorosurfactant content of less than 100 ppm.

17. The process of claim 1 wherein said aqueous fluoropolymer coating composition has a fluorosurfactant content of less than 50 ppm.

## Patentansprüche

1. Verfahren zum Herstellen eines mit Fluorpolymer beschichteten Substrats, umfassend:
das Reduzieren des Fluortensidgehalts einer wässrigen Fluorpolymer-Dispersionsbeschichtungszusammensetzung umfassend ein wässriges Medium und Fluorpolymerteilchen, auf weniger als 300 ppm,
das Aufbringen der wässrigen Fluorpolymer-Dispersionsbeschichtungszusammensetzung auf ein Substrat unter Bildung einer nassen Beschichtung auf dem Substrat; und
das Trocknen der nassen Beschichtung unter Bildung des mit Fluorpolymer beschichteten Substrats durch Aufbringen von Mikrowellenstrahlung auf die nasse Beschichtung,
wobei die wässrige Fluorpolymer-Dispersionsbeschichtungszusammensetzung hinzugesetztes anorganisches wasserlösliches Salz in einer Menge enthält, die die Zeit, die zum Trocknen der nassen Beschichtung auf dem Substrat erforderlich ist, um mindestens 5 % im Vergleich mit einer ansonsten identischen Beschichtungszusammensetzung ohne das hinzugesetzte anorganische wasserlösliche Salz reduziert, wobei das anorganische wasserlösliche Salz aus der Gruppe ausgewählt ist bestehend aus Alkalimetall- und Ammoniumsalzen von Fluorid, Bromid, Chlorid, Nitrat und Sulfat.

2. Verfahren nach Anspruch 1, wobei das hinzugesetzte anorganische wasserlösliche Salz in einer Menge vorliegt, die die Zeit, die zum Trocknen der nassen Beschichtung auf dem Substrat erforderlich ist, um mindestens 10 % im Vergleich mit der Beschichtungszusammensetzung ohne das hinzugesetzte anorganische wasserlösliche Salz reduziert.

3. Verfahren nach Anspruch 1, wobei das hinzugesetzte anorganische wasserlösliche Salz in einer Menge vorliegt, die die Zeit, die zum Trocknen der nassen Beschichtung auf dem Substrat erforderlich ist, um mindestens 15 % im Vergleich mit der Beschichtungszusammensetzung ohne das hinzugesetzte anorganische wasserlösliche Salz reduziert.

4. Verfahren nach Anspruch 1, wobei das hinzugesetzte anorganische wasserlösliche Salz Sulfat- oder Fluoridsalz umfasst.

5. Verfahren nach Anspruch 1, wobei das hinzugesetzte anorganische wasserlösliche Salz die Leitfähigkeit der wässrigen Fluorpolymer-Dispersionsbeschichtungszusammensetzung auf mindestens 600 µS/cm erhöht.

6. Verfahren nach Anspruch 1, wobei das hinzugesetzte anorganische wasserlösliche Salz die Leitfähigkeit der wässrigen Fluorpolymer-Dispersionsbeschichtungszusammensetzung auf den Bereich von 600 bis 2000 µS/cm erhöht.

7. Verfahren nach Anspruch 1, wobei das hinzugesetzte anorganische wasserlösliche Salz die Leitfähigkeit der wässrigen Fluorpolymer-Dispersionsbeschichtungszusammensetzung auf den Bereich von 700 bis 1500 µS/cm erhöht.

8. Verfahren nach Anspruch 1, wobei das hinzugesetzte anorganische wasserlösliche Salz die Leitfähigkeit der wässrigen Fluorpolymer-Dispersionsbeschichtungszusammensetzung auf den Bereich von 800 bis 1200 µS/cm erhöht.

9. Verfahren nach Anspruch 1, wobei die wässrige Fluorpolymer-Beschichtungszusammensetzung 10 bis 70 Gew.-% Fluorpolymer enthält.

10. Verfahren nach Anspruch 1, wobei das Substrat im Wesentlichen für Mikrowellenstrahlung durchlässig ist.

11. Verfahren nach Anspruch 1, wobei das Substrat Polymer, Glas, Keramik und Verbundstoffe davon umfasst.

12. Verfahren nach Anspruch 11, wobei das Substrat in Form von Backutensilien vorliegt.

13. Verfahren nach Anspruch 1, wobei das Substrat Aramid-Faser, Glasfaser, Naturfaser oder Mischungen davon umfasst.

14. Verfahren nach Anspruch 1, wobei das Substrat geflochtene Stränge von Aramid-Faser, Glasfaser, Naturfaser oder Mischungen davon umfasst.

15. Verfahren nach Anspruch 1, wobei das Substrat Glasfasergewebe umfasst.

16. Verfahren nach Anspruch 1, wobei die wässrige Fluorpolymer-Beschichtungszusammensetzung einen Fluortensidgehalt von weniger als 100 ppm aufweist.

17. Verfahren nach Anspruch 1, wobei die wässrige Fluorpolymer-Beschichtungszusammensetzung einen Fluortensidgehalt von weniger als 50 ppm aufweist.

## Revendications

1. Procédé de préparation d'un substrat revêtu de polymère fluoré, comprenant les étapes consistant à:
réduire la teneur en tensioactif fluoré d'une composition aqueuse de revêtement à base d'une dispersion de polymère fluoré, comprenant un milieu aqueux et des particules de polymère fluoré, à moins de 300 ppm,
appliquer ladite composition aqueuse de revêtement à base d'une dispersion de polymère fluoré sur un substrat pour former un revêtement humide sur ledit substrat, et
sécher ledit revêtement humide pour former ledit substrat revêtu d'un polymère fluoré, par application d'un rayonnement micro-onde sur ledit revêtement humide,
dans lequel ladite composition aqueuse de revêtement à base d'une dispersion de polymère fluoré contient un sel hydrosoluble inorganique ajouté en une quantité qui diminue le temps nécessaire au séchage dudit revêtement humide sur ledit substrat d'au moins 5% par rapport à une autre composition de revêtement par ailleurs identique sans ledit sel hydrosoluble inorganique ajouté, ledit sel hydrosoluble inorganique étant choisi dans le groupe constitué des sels de métaux alcalins et d'ammonium des fluorure, bromure, chlorure, nitrate et sulfate.

2. Procédé selon la revendication 1 dans lequel ledit sel hydrosoluble inorganique ajouté est présent en une quantité qui diminue le temps nécessaire au séchage dudit revêtement humide sur ledit substrat d'au moins 10% par rapport à la composition de revêtement sans ledit sel hydrosoluble inorganique ajouté.

3. Procédé selon la revendication 1 dans lequel ledit sel hydrosoluble inorganique ajouté est présent en une quantité qui diminue le temps nécessaire au séchage dudit revêtement humide sur ledit substrat d'au moins 15% par rapport à la composition de revêtement sans ledit sel hydrosoluble inorganique ajouté.

4. Procédé selon la revendication 1 dans lequel ledit sel hydrosoluble inorganique ajouté comprend des sels de sulfate ou de fluorure.

5. Procédé selon la revendication 1 dans lequel ledit sel hydrosoluble inorganique ajouté augmente la conductivité de ladite composition aqueuse de revêtement à base d'une dispersion de polymère fluoré à au moins 600 µS/cm.

6. Procédé selon la revendication 1 dans lequel ledit sel hydrosoluble inorganique ajouté augmente la conductivité de ladite composition aqueuse de revêtement à base d'une dispersion de polymère fluoré à une valeur comprise dans la plage de 600 à 2000 µS/cm.

7. Procédé selon la revendication 1 dans lequel ledit sel hydrosoluble inorganique ajouté augmente la conductivité de ladite composition aqueuse de revêtement à base d'une dispersion de polymère fluoré à une valeur comprise dans la plage de 700 à 1500 µS/cm.

8. Procédé selon la revendication 1 dans lequel ledit sel hydrosoluble inorganique ajouté augmente la conductivité de ladite composition aqueuse de revêtement à base d'une dispersion de polymère fluoré à une valeur comprise dans la plage de 800 à 1200 µS/cm.

9. Procédé selon la revendication 1 dans lequel ladite composition aqueuse de revêtement à base de polymère fluoré contient 10 à 70% en poids d'un polymère fluoré.

10. Procédé selon la revendication 1 dans lequel ledit substrat est sensiblement transparent au rayonnement micro-onde.

11. Procédé selon la revendication 1 dans lequel ledit substrat comprend un polymère, du verre, une céramique et des composites de ceux-ci.

12. Procédé selon la revendication 11 dans lequel ledit substrat se présente sous la forme d'un ustensile de cuisson.

13. Procédé selon la revendication 1 dans lequel ledit substrat comprend une fibre aramide, une fibre de verre, une fibre naturelle ou des mélanges de celles-ci.

14. Procédé selon la revendication 1 dans lequel ledit substrat comprend des brins tressés de fibre aramide, de fibre de verre, de fibre naturelle ou leurs mélanges.

15. Procédé selon la revendication 1 dans lequel ledit substrat comprend une toile de verre.

16. Procédé selon la revendication 1 dans lequel ladite composition aqueuse de revêtement à base de polymère fluoré a une teneur en tensioactif fluoré inférieure à 100 ppm.

17. Procédé selon la revendication 1 dans lequel ladite composition aqueuse de revêtement à base de polymère fluoré a une teneur en tensioactif fluoré inférieure à 50 ppm.
